# NEUE EUROPÄISCHE PATENTSCHRIFT

(11) **EP 0 400 431 B2**
(45) Veröffentlichungstag und Bekanntmachung des Hinweises auf die Entscheidung über den Einspruch: **26.06.1996**
(45) Hinweis auf die Patenterteilung: 06.10.1993
(21) Anmeldenummer: 90109538.0
(22) Anmeldetag: 19.05.1990
(51) Int. Cl.: A61C 17/06

(54) **Abscheideeinheit**
Separation unit
Dispositif séparateur

(30) Priorität: 23.05.1989 DE 3916742
(43) Veröffentlichungstag der Anmeldung: 05.12.1990
(73) Patentinhaber: Dürr-Dental GmbH & Co. KG, D-74321 Bietigheim-Bissingen (DE)
(72) Erfinder: Dürr, Walter, D-7250 Leonberg 7 (DE); Bollmann, Andreas, D-7121 Ingersheim 2 (DE); Hofmann, Hans Joachim, D-7064 Remshalden 3 (DE)
(74) Vertreter: Ostertag, Reinhard

(56) Entgegenhaltungen:
- EP-A- 0 058 353
- EP-A- 0 263 344
- EP-A- 0 263 344
- EP-A- 0 387 774
- WO-A-86/03669
- DE-A- 2 713 321
- DE-A- 3 724 247
- DE-A- 3 724 247
- DE-C- 3 737 002
- DE-C- 3 804 299
- DE-C- 3 804 299
- US-A- 4 663 035

## Beschreibung

Die Erfindung betrifft eine Einheit zum Abscheiden von Luft und von Feststoffpartikeln, insbesondere feinen Amalgampartikeln, aus dem an einem zahnärztlichen Arbeitsplatz anfallenden Abwasser gemäß dem Oberbegriff des Anspruches 1.

Die Erfindung betrifft ferner eine Einheit zum Abscheiden von Luft aus dem an einem zahnärztlichen Arbeitsplatz anfallenden Abwasser gemäß dem Oberbegriff des Anspruches 18.

Eine derartige Abscheideeinheit ist in der US-A-4 663 035 beschrieben. Sie besteht aus einer koaxialen Hintereinanderschaltung eines Zyklons und einer Zentrifuge, wobei an die Bodenwand des Zyklons ein Gemischspeisestutzen angeformt ist, der das dort nach Abtrennung der Luft verbleibende Gemisch aus Flüssigkeit und Feststoffpartikeln zum Inneren der Zentrifugentrommel führt.

In der EP-A1-0 058 353 ist ein Verfahren zum Entgasen von Flüssigkeiten beschrieben, bei welchem der Innenraum einer um eine horizontale Achse drehbaren Zentrifugentrommel evakuiert wird. Die zu entgasende Flüssigkeit wird auf mindestens eine kegelstumpfförmige umlaufende Wand der Zentrifugentrommel aufgebracht, so daß die Flüssigkeit durch die Axialkomponente der Zentrifugalkraft zu einem dünnen Film auseinandergezogen wird und das Vakuum die in der Flüssigkeit gelösten Gasanteile wirksam absaugen kann.

In der DE-C-3 737 002 ist eine Zentrifuge zum Abscheiden feiner Feststoffpartikel aus Abwasser beschrieben, bei welcherein Zuführstutzen ins Innere der Zentrifugentrommel geführt ist, der das nurfeste und flüssige Bestandteile umfassende zu zerlegende Gemisch zuführt. Eine Luftabscheidung durch die Zentrifugentrommel ist in der DE-C-3 737 002 nicht angesprochen.

In der DE-A-2 713 321 ist ferner ein Zyklon zum Abscheiden flüssiger Bestandteile aus dem Luft/Wassergemisch beschrieben, welches beim Absaugen des Mundes eines Patienten durch einen Zahnarzt anfällt. Das Austragen der flüssigen Gemischbestandteile aus dem Zyklon erfolgt unter Verwendung einer Schleuse, die nach Art eines Doppelventiles aufgebaut ist.

Will man in einer eingangs beschriebenen Abscheideeinheit eine gute Abscheidung der Luft und zugleich eine gute Abscheidung der Amalgampartikel gewährleisten, so muß man den der Zentrifuge vorgeschalteten Zyklon verhältnismäßig groß bauen und in diesem mit hohen Strömungsgeschwindigkeiten arbeiten.

Für manche Anwendungen wäre es jedoch vorteilhaft, wenn man eine Einheit zum Abscheiden von Luft- und Feststoffpartikeln aus dem am zahnärztlichen Arbeitsplatz anfallenden Abwasser hätte, welche kompakter baut, so daß sie sich leicht in den Unterschrank des Speibeckens oder einen anderen Schrank integrieren läßt. Auf diese Weise wird es auch möglich, an bestehenden Arbeitsplatzinstallationen den dort schon vorhandenen Luftabscheidezyklon durch eine kombinierte Abscheideeinheit zu ersetzen, die nun zusätzlich auch die Abscheidung der Amalgampartikel bewerkstelligen kann.

Durch die vorliegende Erfindung soll daher eine Abscheideeinheit gemäß dem Oberbegriff des Anspruches 1 so weitergebildetwerden, daß bei kompakten Gesamtabmessungen eine gute Abscheidung sowohl von Luft als auch von feinen Feststoffpartikeln erhalten wird.

Diese Aufgabe ist erfindungsgemäß gelost durch eine Abscheideeinheit gemäß Anspruch 1.

Bei der erfindungsgemäßen Abscheideeinheit dient die Zentrifuge nicht nur zum Abscheiden der feinen Feststoffpartikel sondern auch zum Abtrennen von Luftbestandteilen aus dem Gemisch unter der in der Zentrifuge auch bei geringen Luftdurchsatz erhaltenen hohen Zentrifugalkraft. Das Abführen der abgeschiedenen Luft erfolgt über den radial im Inneren des Gemischzuführstutzens angeordneten Luftabführstutzen, der mit der unterdruckbeaufschlagten Luftauslaßöffnung des Gerätegehäuses in Verbindung steht.

Vorteilhafte Weiterbildungen der Erfindung sind in Unteransprüchen angegeben.

Die Weiterbildung der Erfindung gemäß Anspruch 2 ist im Hinblick aufeine weitere Verbesserung der Abtrennung von Luftanteilen aus dem Gemisch von Vorteil, ebenso die Weiterbildung der Erfindung gemäß Anspruch 4. Die Trommeleinsätze bilden zusammen eine Schikane, welche von zunächst der Trommelachse benachbarten, also verhältnismäßig viel Luft enthaltenden Gemischanteilen auf einem mäanderförmigen Weg durchlaufen werden müssen, bevor diese dann zunehmend von Luft befreiten Gemischanteile in den Außenbereich der Zentrifugentrommel gelangen, wo die Abscheidung der Feststoffpartikel gegen die Umfangswand der Zentrifugentrommel erfolgt.

Mit der Weiterbildung der Erfindung gemäß Anspruch 3 wird erreicht, daß die Feststoffpartikel enthaltende Flüssigkeit zwangsweise ins Innere des überder Umfangswand der Zentrifugentrommel aufgebauten Wasserringes geleitet wird.

Die Weiterbildung der Erfindung gemäß Anspruch 5 ist im Hinblickaufein gutes Auffangen der Luftanteile durch den Luftabführstutzen und auch im Hinblickaufein gutes Abgeben von innerhalb des Luftabführstutzens etwa noch abgeschiedenen Restanteilen an Flüssigkeit von Vorteil.

Mit der Weiterbildung der Erfindung gemäß Anspruch 6 wird erreicht, daß das vom Gemischzuführstutzen abgegebene Gemisch in einer Richtung in die Zentrifugentrommel eingespeist wird, die zu demjenigen Bereich des Trommelinneren führt, in welchem überwiegend die Abtrennung der Feststoffpartikel erfolgt. Diese Einspeiserichtung kann deshalb gewählt werden, da der Dichteunterschied zwischen Luft und Flüssigkeit erheblich größer ist als der Dichteunterschied zwischen Flüssigkeit und Feststoffpartikeln.

Mit der Weiterbildung der Erfindung gemäß Anspruch 7 erhält man eine zusätzliche Abscheidung von in der ausgetragenen Luft etwa noch vorhandenen Restbestandteilen an Flüssigkeit durch Zentrifugenwirkung im Luftabführstutzen. Diese Wirkung ist dann noch verstärkt, wenn man gemäß Anspruch 8 radiale Arme, die die Verbindung zwischen einem Nabenteil und dem Luftabführstutzen herstellen, als durchgehende plattenförmige Teile ausbildet. Durch die Drehung des Luftabführstutzens erhält man ferner auch einen Mitnahmeeffekt auf das zu zerlegende Gemisch, welches sich in dem ringförmigen Raum zwischen Gemischzuführstutzen und Luftabführstutzen befindet. Hieraus ergibt sich eine Vortrennung durch Zyklonwirkung.

Die Gemischmitnahme im ringförmigen Raum zwischen Gemischzuführstutzen und Luftabführstutzen hat auch den weiteren Vorteil, daß man dort mit kleinerem Querschnitt arbeiten kann. Die Einheit baut somit kompakter. Ein weiterer Vorteil, der durch die Gemischmitnahme erhalten wird, ist der, daß die Lage des Gemischeinlaßstutzens bezüglich der Umfangswand des Zyklons weniger kritisch ist.

Mit der Weiterbildung der Erfindung gemäß Anspruch 9 wird eine weitere Verbesserung der Vorabscheidung durch Zyklonwirkung erhalten, wobei man die Einmündungsrichtung des tangentialen Gemischeinlasses und die Drehrichtung des Luftabführstutzens gleich wählt, so daß sich insgesamt im Ringraum zwischen Gemischzuführstutzen und Luftabführstutzen ein starker Drall des Gemisches ausbildet.

Typischerweise hat man an einem zahnärztlichen Arbeitsplatz zwei verschiedene Quellen für Luft- und Feststoffpartikel enthaltendes Abwasser, nämlich das Speibecken und die Absaugeinrichtung. Letztere stellt ein Gemisch mit sehr hohem Luftanteil und geringen Flüssigkeitsanteilen bereit, während am Speibecken große Wassermengen mit kleinen Luftanteilen anfallen. Mit der Weiterbildung der Erfindung gemäß Anspruch 10 ist es möglich, die nur geringe Luftanteile enthaltenden Anteile direkt der Zentrifugentrommel zuzuführen. Ein Zusammenführen beider Abwasseranteile würde dagegen dazu führen, daß man ein Gemisch mit einem insgesamt verhältnismäßig hohen Luftanteil erhält, welches dann insgesamt schwieriger in seine Bestandteile zu zerlegen ist.

Die Weiterbildung der Erfindung gemäß Anspruch 11 ist im Hinblick auf ein zuverlässiges rasches Beschleunigen des von unten in die Zentrifugentrommel eingespeisten Abwasseranteiles mit kleinem Luftanteil von Vorteil.

Versieht man gemäß Anspruch 12 die Oberseite des Sperrflansches mit Pumpenflügeln, so wirkt die Zentrifugentrommel zugleich als Pumpenlaufrad, welches den Druckunterschied zwischen dem Sauggebläse des Arbeitsplatzes und der Abwasserleitung aufnimmt. Man kann dann das aus dem Speibecken anfallende Abwasser einfach durch den Unterdruck des Sauggebläses ansaugen und benötigt keine gesonderte Pumpe zum Zuführen des Abwassers vom Speibecken her.

Mitder Weiterbildung der Erfindung gemäß Anspruch 13 oder 14 lassen sich aufeinfache Weise klare Flüssigkeitsanteile aus dem oberen Abschnitt des Sedimentierbehälters zurückpumpen, welche sich dort bilden, wenn die Abscheideeinheit angehalten wird und längere Zeit still steht.

Eine Einheit, wie sie im Anspruch 15 angegeben ist, eignet sich besonders gut zur Verwendung mit zwei unterschiedlichen Abwasserquellen: einer ersten Abwasserquelle, bei welcher geringe Wassermengen anfallen, die jedoch mit hohen Luftanteilen vermischt sind, stark zur Schaumbildung neigen und darüber hinaus Feststoffpartikel enthalten; ferner eine zweite Abwasserquelle, welche große Wassermengen bereitstellt, die aber nur geringe Luftanteile aufweisen und zudem abzuscheidende Feststoffpartikel enthalten. Bei der Einheit gemäß Anspruch 15 werden die entsprechenden Abwässer unterschiedlich behandelt. Nur der hohe Luftanteile enthaltende erste Abwasserstrom wird über das Gemischzuführungsrohr, in welchem eine Vortrennung von gasförmigen und flüssigen Bestandteilen erfolgt, zugeführt, während der zweite Abwasserstrom direkt ins Innere der Zentrifugentrommel geleitet wird. Auf diese Weise beeinträchtigt die Zufuhr großer Wassermengen nicht die Trennung zwischen Luftanteilen und Flüssigkeitsanteilen.

Mit der Weiterbildung der Erfindung gemäß Anspruch 16 wird erreicht, daß die beiden der Zentrifuge zugeführten Abwasserströme im wesentlichen laminar zusammengeführt werden. Die Trennung zwischen luftreichem Abwasserstrom und luftarmem Abwasserstrom bleibt somit auch aufdem letzten, gemeinsam zurückgelegten Weg ins Innere der Zentrifugentrommel erhalten.

Mit der Weiterbildung der Erfindung gemäß Anspruch 17 wird erreicht, daß der luftreiche Abwasserstrom radial von innen her auf den luftarmen Abwasserstrom geschichtet wird, was im Hinblick auf einen guten Wirkungsgrad bei der Luftabscheidung von Vorteil ist.

Eine Abscheideeinheit gemäß Anspruch 1 hat eine so gute Abscheiderate für Luft, daß sich ihr Einsatz als reiner Luftabscheiderauch dann lohnt, wenn eine Abscheidung von Amalgampartikeln nicht unbedingt notwendig ist. Eine entsprechende Abscheideeinheit ist im Anspruch 18 angegeben.

Nachstehend wird die Erfindung anhand von Ausführungsbeispielen unter Bezugnahme aufdie Zeichnung näher erläutert. In dieser zeigen:
- Figur 1:: einen axialen Schnitt durch eine Abscheideeinheit, welche das an einem zahnärztlichen Arbeitsplatz anfallende Gemisch aus Flüssigkeit/Feststoffpartikeln/Luft in seine Bestandteile zerlegt.
- Figur 2:: einen vergrößerten axialen Schnitt durch den Zentrifugenteil der in Figur 1 gezeigten Abscheideeinheit;
- Figur 3:: eine ähnliche Ansicht wie Figur 2, in welcher jedoch eine abgewandelte Abscheideeinheit wiedergegeben ist, welche nur zum Abtrennen von Luft aus dem anfallenden Gemisch dient;
- Figur 4:: einen axialen Schnitt durch eine weiter abgewandelte Abscheideeinheit; und
- Figur 5:: einen transversalen Schnitt durch die Abscheideeinheit nach Figur 4 längs der abgewinkelten Schnittlinie V-V.

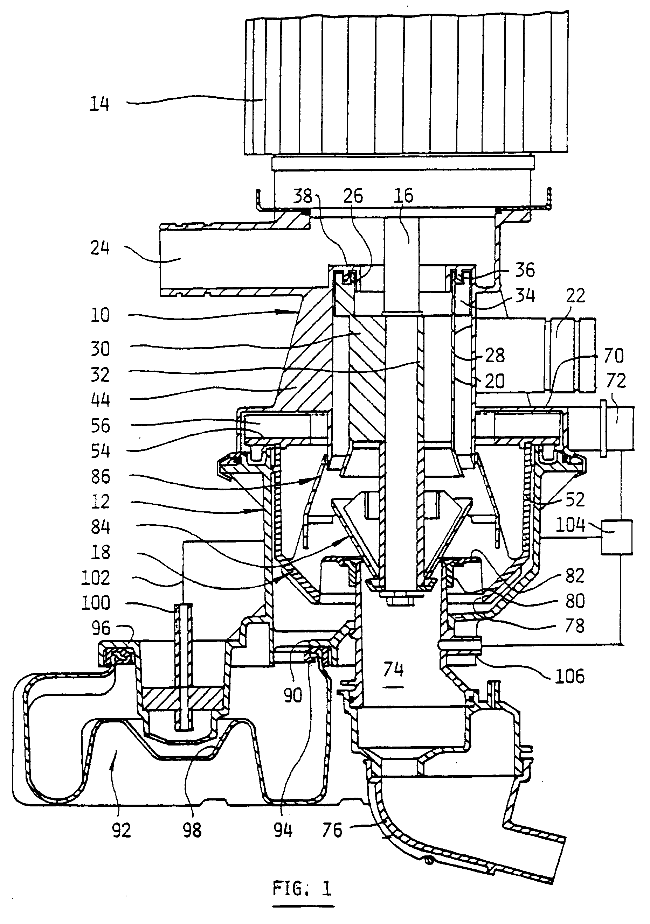

Figur 1 zeigt eine Abscheideeinheit zum Zerlegen des an einem zahnärztlichen Arbeitsplatz anfallenden Abwassers in seine Bestandteile, nämlich Luft, Wasser und andere flüssige Bestandteile sowie Feststoffanteile, hierunter insbesondere feine Amalgampartikel. Die Abscheideeinheit hat ein mehrteiliges Gehäuse mit einem oberen Gehäusesegment 10 sowie einem unteren Gehäusesegment 12.

Das obere Gehäusesegment 10 stellt den Deckel für das becherförmige untere Gehäusesegment 12 dar und trägt einen elektrischen Antriebsmotor 14. Dessen Welle 16 trägt eine insgesamt mit 18 bezeichnete Zentrifugentrommel, deren Aufbau weiter unten im einzelnen beschrieben wird.

Zum oberen Gehäusesegment 10 gehört ein Gemischzuführrohr 20, in welches tangential ein Gemischeinlaßstutzen 22 einmündet. Letzterer ist mit der Mund-Absaugeinrichtung des Arbeitsplatzes verbunden.

Im oberen Abschnitt des Gehäusesegmentes 10 ist ein Luftauslaßstutzen 24 vorgesehen, der mit einer mittigen Durchgangsöffnung 26 in Verbindung steht, die die Welle 16 umgibt.

Die Durchgangsöffnung 26 kommuniziert mit einem Luftabführrohr 28, welches unter radialem Abstand im Inneren des Gemischzuführrohres 20 angeordnet ist und sich ebenfalls ins Innere der Zentrifugentrommel 18 erstreckt.

Wie aus der Zeichnung ersichtlich, ist das Luftabführrohr 28 über drei radiale, plattenförmige, von Durchbrechungen freie Arme 30 miteinem Nabenabschnitt 32 verbunden, derauf der Welle 16 sitzt. Am oberen Ende des Luftabführrohres 28 sind radial nach außen überstehend eine größere Anzahl vom Pumpenflügel 34 in Umfangsrichtung verteilt angeformt, die innen eine rechteckige Ausnehmung aufweisen und so zusammen mit einer am freien Ende keilförmig zulaufenden ringförmigen Sperrwand 36, dem oberen Ende des Gemischzuführrohres 20 und einer transversalen Zwischenwand 38 des Gehäuses eine dynamische Dichtung mit Rückpumpwirkung bilden, so daß keine direkte Stömungsmittelverbindung vom Gemischeinlaßstutzen 22 zur Durchgangsöffnung 26 besteht.

An das untere Ende des Luftabführrohres 28 ist eine kegelförmige Schürze 40 angeformt. Untergleichem Winkel ist das untere Ende des Gemischzuführrohres 20 abgeschrägt, wie bei 42 gezeigt.

Zur Versteifung des oberen Gehäusesegmentes 10 sind drei radiale Versteifungsrippen 44 vorgesehen, die das Gemischzuführrohr umgeben.

Die Zentrifugentrommel 18 umfasst ein Nabenteil 46, welches über plattenförmige radiale Arme 48 mit einem kegelstumpfförmigen Boden 50 verbunden ist. Die größeren Durchmesser aufweisende Basis der kegelförmigen Bodenwand 50 weist nach oben und trägt eine zylindrische Trommelumfangswand 52. Aufdas obere Ende der Letzteren istein ringförmiger Sperrflansch 54 aufgesetzt, dessen Oberseite miteinem Ring von Pumpenflügeln 56 besetzt ist.

In dem radial überdie Trommelumfangswand 52 überstehenden Abschnitt des Sperrflansches 54 sind auf der Unterseite weitere Weine Pumpenflügel 58 vorgesehen, die in einer in Umfangsrichtung verlaufenden Rinne 60 eines horizontalen Flansches 62 des unteren Gehäusesegmentes 12 laufen und eine dynamische Dichtung darstellen.

Das obere Gehäusesegment 10 hat einen dem Flansch 62 gegenüberliegenden Flansch 64, und an diesen beiden Flanschen sind die beiden Gehäusesegmente unter Verwendung eines Kammerringes 66 zusammengefügt. Zur Abdichtung nach außen ist zwischen die Flansche 62 und 64 ein O-Ring 68 eingelegt.

Das obere Gehäusesegment 10 ist in der Nachbarschaft des Sperrflansches 54 mit einer schalenförmigen Wand 70 versehen, die einen Pumpenraum für das durch den Sperrflansch 54 und die Pumpenflügel 56 gebildete Pumpenlaufrad bildet. Dieser Pumpenraum steht mit einem Flüssigkeitsauslaßstutzen 72 in Verbindung, der an die Kanalisation angeschlossen ist.

Durch den schräg abfallenden Boden des becherförmigen unteren Gehäusesegmentes 12 ist ein zweites Gemischzuführrohr 74 dicht hindurchgeführt, welches über ein Anschlußstück 76 und einen nicht näher gezeigten Schlauch mit dem Speibecken des Arbeitsplatzes verbunden ist.

Das zweite Gemischzuführrohr 74 durchsetzt eine Schlammabgabeöffnung 78, die am unteren Ende des kegelförmigen Bodens 50 der Zentrifugentrommel 18 vorgesehen ist. Das obere Ende des Gemischzuführrohres 74 trägt eine Lippendichtung 80, die unter geringem Spiel mit einem Dichtring 82 zusammenarbeitet, der von den Armen 48 getragen ist.

Auf die Arme 48 ist ferner ein kegelförmiger Trommeleinsatz 84 aufgesetzt, dessen Spitze nach unten weist und unter radialem Spiel in das obere Ende des zweiten Gemischzuführrohres 74 eingreift.

Auf den Armen 48 sitzt ferner ein zweiter kegelstumpfförmiger Trommeleinsatz 86, der den ersten Trommeleinsatz 84 mit seinem unteren Ende axial und radial übergreift und mit seinem oberen Ende unter geringem radialem Spiel das untere Ende des ersten Gemischzuführrohres 20 übergreift.

Auf diese Weise wird das durch den Ringspalt zwischen Trommeleinsatz 84 und zweiten Gemischzuführrohr 74 von unten zugeführte, aus dem Speibecken stammende Wasser zwangsläufig radial nach außen in Richtung zur Trommelumfangswand bewegt, wobei es beim Eintreten in das Innere der Zentrifugentrommel rasch durch die Arme 48 auf Drehzahl gebracht wird.

In demjenigen Raum des Trommelinneren, der über den Armen 48 liegt und vom zweiten Trommeleinsatz 86 umschlossen ist hat man auf Grund von Mitnahmeeffekten ebenfalls schon eine hohe Drehgeschwindigkeit, so daß sich dort schon unter verhältnismäßig großer Zentrifugaleinwirkung eine Abscheidung von Luftanteilen ergibt. Auf Grund ihrer geringeren Dichte gelangen diese Luftanteile durch den Ringspalt, der durch die freien Ränder von kegeliger Schürze 40 des Luftabführrohres 28 und Trommeleinsatz 84 begrenzt ist, in das Innere des Luftabführrohres 28 bzw. in den Innenraum des Trommeleinsatzes 84. Im Innenraum des Trommeleinsatzes 84 hat man dann eine stark erhöhte Mitnahme des Luft/Flüssigkeitsgemisches, welches typischerweise auf Grund von Eiweißanteilen oder anderen schaumbildenden Substanzen Schaumanteile erhält. Im Inneren des Trommeleinsatzes 84 werden diese Schaumanteile zerlegt, wobei der dann entstehende Luftanteil nach oben in das Luftabführrohr 28 wandert, der Flüssigkeitsanteil über das obere Ende des Trommeleinsatzes 84 gegen den äußeren Trommeleinsatz 86 geschleudert wird und dann längs des letzteren nach unten wandert. Er gerät dann wieder in den Einflußbereich der Arme 48, so daß nun wieder mit der vollen Zentrifugendrehzahl, nunmehr aber wegen des vergrößerten Abstandes unter vergrößerter Zentrifugalkraft die Abscheidung der letzten Luftbestandteile erfolgt, bevor dieser Gemischanteil dann über die Unterkante des Trommeleinsatzes 84 in den radial außen liegenden Bereich der Zentrifugentrommel gelangt, in dem sich unter dem Sperrflansch 54 aufbauenden Wasserring unter sehr hoher Zentrifugalkrafteinwirkung die Abscheidung der im Gemisch enthaltenen feinen Amalgampartikel erfolgt.

Wie aus der Zeichnung ersichtlich, hat das untere Ende des Trommeleinsatzes 86 etwas größeren Abstand von der Achse der Welle 16 als der innere Rand des Sperrflansches 54, so daß die Feststoffpartikel enthaltende Flüssigkeit zwangsweise ins Innere des über der Trommelumfangswand 52 aufgebauten Wasserringes geleitet wird.

Wird die Abscheideeinheit abgeschaltet, wenn längere Zeit kein Wasseranfall am Arbeitsplatz zu erwarten ist, so sinkt mit abnehmender Drehzahl der Zentrifugentrommel 18 der über der Trommelumfangswand 52 aufgebaute Wasserring nach unten und gelangt zusammen mit den an der Trommelumfangswand 52 abgeschiedenen Feststoffpartikeln über die Schlammabgabeöffnung 78 des Trommelbodens 50 aufdie schräg abfallende Bodenwand 88 des unteren Gehäusesegmentes 12. In der Bodenwand 88 ist eine Schlammablauföffnung 90 vorgesehen, die zum Inneren eines Sedimentierbehälters 92 führt. Dieser ist über eine Dichtung 94 unter Verwendung einer nicht mehr gezeigten Wechselmechanik dicht an die Unterseite eines Halteflansches 96 angelegt, der an das untere Gehäusesegment 12 angeformt ist.

Der Sedimentierbehälter 92 hat eine vom Boden hochgezogene Pumpmulde 98, in welche ein Saugstutzen 100 eintaucht. Letzterer ist über eine Leitung 102 mit der Saugöffnung einer nur schematisch wiedergegebenen Strahlpumpe 104 verbunden. Deren Einlaß ist an den Flüssigkeitsauslaßstutzen 72 angeschlossen, ihr Auslaß führt zu einem Hilfseinlaßstutzen 106, der an dem zweiten Gemischzuführrohr 74 vorgesehen ist. Auf diese Weise sorgt ein Teilstrom des gereinigten Abwassers für das Absaugen desjenigen überstehenden klaren Flüssigkeitsvolumens, welches man nach längerem Stillstand der Abscheideeinheit über der Oberkante der Pumpmulde 98 im Sedimentierbehälter 92 antrifft. Im Sedimentierbehälter 92 wird so Platz für das Absinken eines weiteren Wasserringes bei erneutem Anhalten der Abscheideeinheit geschaffen.

Man erkennt, daß bei der oben beschriebenen Abscheideeinheit das Gemischzuführrohr 20 und das Luftabführrohr 28 einen ringförmigen Zyklonraum begrenzen, in welchem schon eine Vortrennung des durch den Gemischeinlaßstutzen 22 zugeführten Gemisches derart erfolgt, daß sich Luftanteile auf der Innenseite dieses Ringraumes ansammeln. Diese Luftanteile können aber nicht direkt die Durchgangsöffnung 26 erreichen, müssen vielmehr auf jeden Fall durch die Zentrifugentrommel 18 strömen, wo reine Luftanteile dann über die Unterkante der Schürze 40 dann ins Innere des Luftabführrohres 28 gelangen können, während Schaumanteile im Inneren des Trommeleinsatzes 84 und/oder im Inneren des Trommeleinsatzes 86 unter hoher Zentrifugalkrafteinwirkung in Luft und Flüssigkeit zerlegt werden. Die noch Feststoffpartikel enthaltenden Flüssigkeitsanteile gelangen dann auf einem ähnlichen Weg durch die Zentrifugentrommel 18, wie die direkt durch den Boden der Zentrifugentrommel 18 eingespeisten luftarmen Abwasseranteile. Aus diesen Anteilen wird über der Trommelumfangswand 52 der Feststoffanteil abgeschieden.

Auf Grund der sehr guten Luftabscheidekapazität durch die Zentrifugentrommel 18 kann man auf einen große Abmessungen aufweisenden Luftabscheidezylon verzichten; man erkennt, daß die in der Zeichnung wiedergegebene Abscheideeinheit nur geringfügig höher baut als eine normale Amalgam-Abscheidenzentrifuge.

In Abwandlung des Ausführungsbeispieles nach Figur 1 kann man anstelle der Wasser-Strahlpumpe 104 eine mit Luft als Pumpmedium arbeitende Strahlpumpe verwenden. Diese wird mit ihrer Saugöffnung wieder an die Leitung 102 angeschlossen. Ihr Auslaß wird vom Gemischeinlaßstutzen 22 her mit Unterdruck beaufschalgt, und ihre weitere Anschlußöffnung steht mit der Atmopshäre in Verbindung.

Bei einem ebenfalls in der Zeichung nicht wiedergegebenen, weiter abgewandelten Ausführungsbeispiel soll nur eine Abscheidung von Luftanteilen aus dem durch dem Gemischeinlaßstutzen 22 zugeführten Gemisch erfolgen. Dies erreicht man dadurch, daß man den Innenrand des Sperrflansches 54 bündig zur Innenfläche der Trommelumfangswand 52 macht, so daß sich über der Letzteren kein Wasserring aufbauen kann. Damit findet dann keine nennenswerte Feststoffabscheidung im Inneren der Zentrifugentrommel 18 statt, so daß die Bodenwand 88 verschlossen, also ohne Schlammablauföffnung 90 ausgebildet werden kann. Es versteht sich, daß dann auch der Sedimentierbehälter 92, die Strahlpumpe 104 und der Hilfseinlaßstutzen 106 weggelassen werden können.

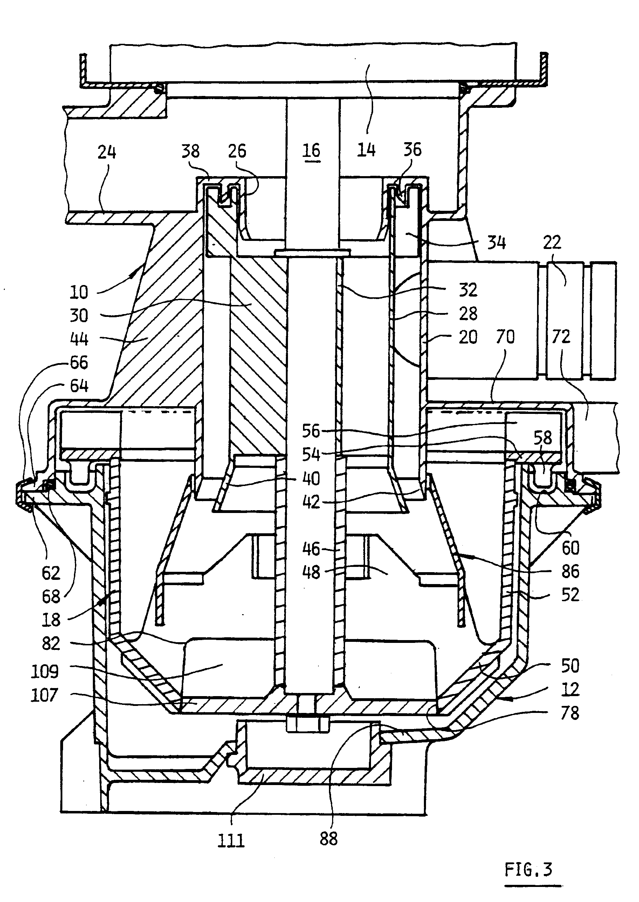

Bei einem weiter abgewandelten Ausführungsbeispiel nach Figur 3 ist auch das zweite Gemischzuführrohr 74 weggelassen und der Boden 50 der Zentrifugentrommel 18 ist durch ein Bodenteil 107 verschlossen. Dieses trägt oben Flügel 109, die die Arme 48 ergänzen. Das Gemischzuführrohr 74 ist durch einen Stopfen 111 ersetzt. Sowohl das vom Speibecken stammende Abwasser als auch das von der Absaugeinrichtung stammende Abwasser werden gemeinsam dem Gemischeinlaßstutzen 22 zugeführt. Man hat in diesem Falle dann allerdings eine etwas schlechtere Abtrennung der Luftbestandteile.

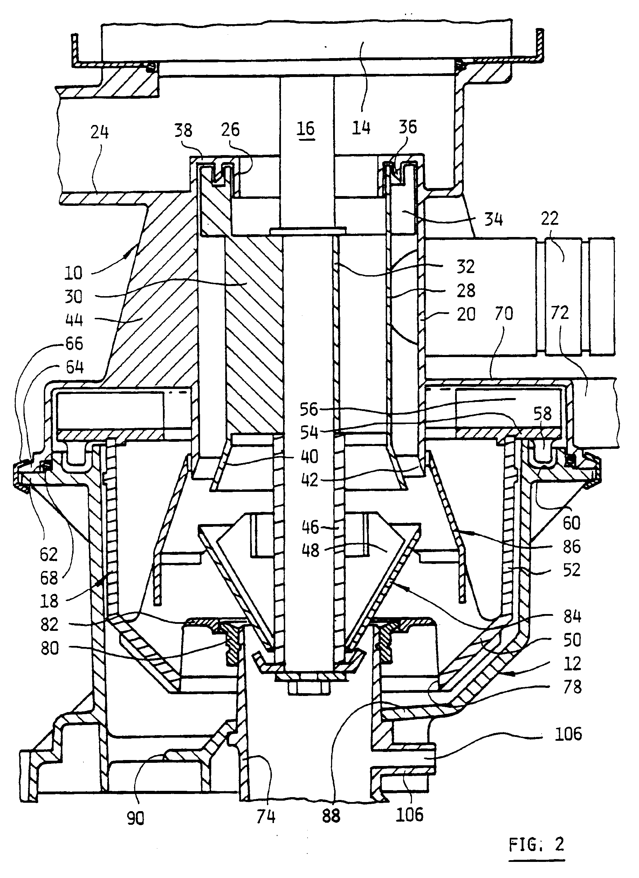

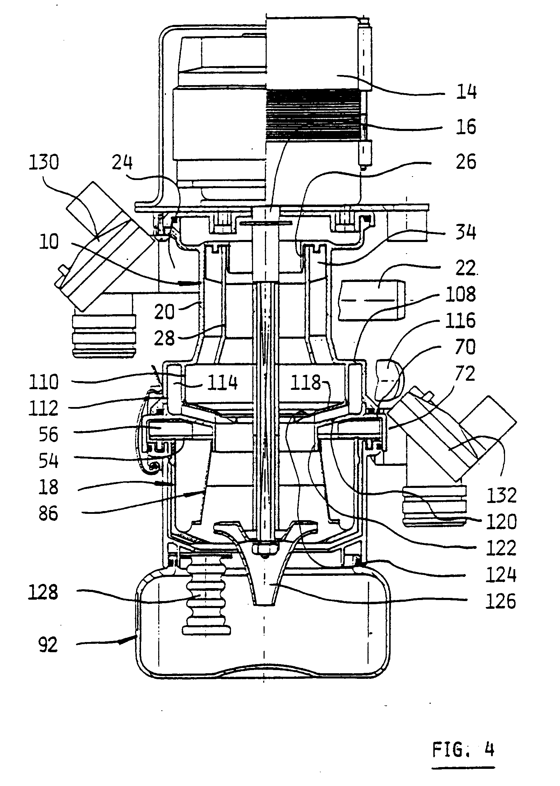

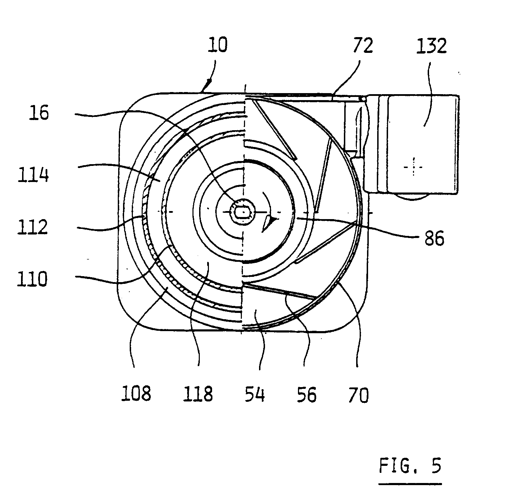

Bei einer weiteren in den Figuren 4 und 5 gezeigten Abscheideeinheit sind wiederum Bauteile, die obenstehend unter Bezugnahme aufdie Figuren 1 bis 3 schon erläutert wurden, mit denselben Bezugszeichen versehen. Diese Bauteile brauchen nicht noch einmal im einzelnen erläutert zu werden.

Die Abscheideeinheit nach Figur 4 unterscheidet sich von zuvor beschriebenen Ausführungsbeispielen in erster Linie dadurch, daß eine direkte Einspeisung von luft- und schaumarmen Abwasser zur Zentrifugentrommel vorgesehen ist. Hierzu ist an das untere Ende des Gemischzuführrohres 20 ein Flansch 108 angeformt, von welchem eine innere zylindrische Schürze 110 sowie eine äußere zylindrische Schürze 112 nach unten hängen. Diese begrenzen zusammen mit der Oberseite der zum Zentrifugendeckel gehörenden Wand 70 einen Ringkanal 114, welcher mit einem Anschlußstutzen 116 in Verbindung steht. An letzteren wird die Speischale des Arbeitsplatzes angeschlossen.

In das untere Ende der Schürze 110 ist ein kegelförmig abfallendes Bodenteil 118 eingesetzt. Entsprechend schräg abfallend ist ein Abschnitt 120 der Wand 70 ausgebildet. Auf diese Weise steht der Ringkanal 114 mit einem vom Wandabschnitt 120 nach unten herabhängenden Stutzen 122 in Verbindung, der ins Innere der Zentrifuge führt.

Wie aus Figur 4 ersichtlich, hat die Flüssigkeitsabgabeöffnung 124 des Bodenteiles 118 kleineren Durchmesser als dem lichten Innendurchmesser des Stutzens 122 entspricht.

Auf diese Weise gelangt luft- und schaumreiches Abwasser über den Gemischeinlaßstutzen 22 und durch den durch das Gemischzuführrohr 20 und das Luftabführrohr 28 begrenzten Zyklonraum zum Inneren der Zentrifugentrommel 18, während luft- und schaumarmes Wasser über den Anschlußstutzen 116 dem Inneren der Zentrifugentrommel 18 zugeführt wird.

Bei dem Ausführungsbeispiel nach Figur 4 ist der Sedimentierbehälter 92 direkt auf das untere Ende des Gehäusesegmentes 12 aufgesetzt. Zum Rückpumpen über dem Sediment stehenden Wassers aus dem Sedimentierbehälter 92 ist ein schnorchelähnliches Pumpenlaufrad 126 vorgesehen, welches auf das untere Ende der Welle 16 aufgesetzt ist.

Im übrigen ist in Figur 4 mit 128 ein Sediment-Pegeldetektor, mit 130 ein an den Luftauslaßstutzen 24 angeschlossenes Magnetventil und mit 132 ein dem Flüssigkeitsauslaßstutzen 72 zugeordnetes Magnetventil bezeichnet.

## Patentansprüche

1. Einheit zum Abscheiden von Luft und von Feststoffpartikeln, insbesondere feinen Amalgampartikeln, aus dem an einem zahnärztlichen Arbeitsplatz anfallenden Abwasser, mit einer Zentrifugentrommel (18), die eine über radiale Stege (48) von einer Trommelnabe (46) getragene Umfangswand (52), einen von deren oberem Rand nach innen zurückspringenden ringförmigen Sperrflansch (54) sowie eine eine Schlammablauföffnung (78) aufweisende Bodenwand (50) hat, mit einem die Zentrifugentrommel (18) umgebenden Gerätegehäuse (10, 12), welches mit einem darunterliegenden Sedimentierbehälter (92) in Verbindung steht, und mit einem durch die Ringöffnung des Sperrflansches (54) ins Innere der Zentrifugentrommel (18) geführten Gemischzuführrohr (20), dadurch gekennzeichnet, daß im Inneren des Gemischzuführrohres (20) unter radialem Abstand von dessen Innenfläche ein Luftabführrohr (28) vorgesehen ist, welches mit einer Luftauslaßöffnung (26) des Gerätegehäuses (10, 12) in Verbindung steht und sich ebenfalls ins Innere der Zentrifugentrommel (18) erstrecht, wobei das Gemischzuführrohr (20) und das Luftabführrohr (28) einen ringförmigen Zyklonraum begrenzen.

2. Einheit nach Anspruch 1, dadurch gekennzeichnet, daß die Zentrifugentrommel (18) einen kegelförmigen Trommeleinsatz (84) aufweist, dessen Spitze nach unten weist und dessen Basis dem freien Ende des Gemischzuführrohres (20) unter axialem Abstand gegenüberliegt.

3. Einheit nach Anspruch 2, dadurch gekennzeichnet, daß die Zentrifugentrommel (18) einen zweiten im wesentlichen kegelstumpfförmigen Trommeleinsatz (86) aufweist dessen Spitze nach oben weist und das freie Ende des Gemischzuführrohres (20) unter geringem radialem Spiel übergreift und dessen Basis den ersten Trommeleinsatz (84) übergreift

4. Einheit nach Anspruch 3, dadurch gekennzeichnet, daß das untere Ende des kegelstumpfförmigen Trommeleinsatzes (86) größeren Durchmesser aufweist als der innere Rand des Sperrflansches (54).

5. Einheit nach einem der Ansprüche 1-4, dadurch gekennzeichnet, daß das Luftabführrohr (28) an seinem unteren Ende mit einer sich trichterförmig erweiternden Schürze (40) versehen ist.

6. Einheit nach Anspruch 4 in Verbindung mit Anspruch 5, dadurch gekennzeichnet, daß der Öffnungswinkel der trichterförmigen Schürze (40) des Luftabführrohres (28) und der Öffnungswinkel des zweiten Trommeleinsatzes (86) gleich groß sind.

7. Einheit nach einem der Ansprüche 1-6, dadurch gekennzeichnet, daß das Luftabführrohr (28) drehfest mit der Zentrifugentrommel (18) verbunden ist und an seinem oberen Ende über eine dynamische Dichtung (34-38), die vorzugsweise als Rückdruck aufbauende Pumpe ausgebildet ist, gegen das Gerätegehäuse (10, 12) abgedichtet ist.

8. Einheit nach Anspruch 7, dadurch gekennzeichnet, daß das Luftabführrohr (28) über radiale Arme (30) mit einem Nabenteil (32) verbunden ist, welche durchbrechungsfrei sind und vorzugsweise über mindestens die Hälfte der gesamten axialen Erstreckung des Luftabführrohres verlaufen.

9. Einheit nach einem der Ansprüche 1-8, dadurch gekennzeichnet, daß das Gemischzuführrohr (20) einen tangentialen Gemischeinlaßstutzen (22) trägt.

10. Einheit nach einem der Ansprüche 1-9, gekennzeichnet durch ein zweites Gemischzuführrohr (74), welches durch den Boden des Gerätegehäuses (10, 12) und durch die im Boden der Zentrifugentrommel (18) vorgesehene Schlammablauföffnung (78) ins Innere der Zentrifugentrommel (18) geführt ist.

11. Einheit nach Anspruch 10, gekennzeichnet durch eine auf das freie Ende des zweiten Gemischzuführrohres (74) aufgesetzte ringförmige Dichtung (80), die mit einer von der Zentrifugentrommel (18) getragenen ringförmigen Dichtung (82) zusammenarbeitet

12. Einheit nach Anspruch 11, dadurch gekennzeichnet, daß die Oberseite des Sperrflansches (54) mit Pumpenflügeln (56) besetzt ist.

13. Einheit nach Anspruch 12, gekennzeichnet durch eine an den Flüssigkeitsauslaß (72) des Gerätegehäuses (10, 12) angeschlossene Strahlpumpe (104), deren Auslaß mit dem zweiten Gemischzuführrohr (74) verbunden (106) ist und deren Saugöffnung mit einem oberen Abschnitt des Sedimentierbehälters (92) verbunden (100, 102) ist.

14. Einheit nach einem der Ansprüche 1-12, gekennzeichnet durch eine Strahlpumpe (104), deren Einlaß mit Atmosphäre, deren Auslaß mit den Gemischeinlaßstutzen (22) und deren Saugöffnung mit einem oberen Abschnitt des Sedimentierbehälters (92) verbunden (100, 102) ist.

15. Einheit nach einem der Ansprüche 1 bis 14, dadurch gekennzeichnet, daß das untere Ende des Gemischzuführrohres (20) von einem in ihn ausmündenden Ringkanal (114) umgeben ist, der mit einem Anschlußstutzen (116) in Verbindung steht, welchem wenig Luftanteile enthaltendes Abwasser zugeführt wird.

16. Einheit nach Anspruch 15, dadurch gekennzeichnet, daß das untere Ende des Gemischzuführrohres (20) ein nach innen und unten geneigt verlaufendes Bodenteil (118) trägt und vom Ringkanal (114) eine entsprechend schräg nach innen und unten verlaufende Leitwand (120) ausgeht.

17. Einheit nach Anspruch 16, dadurch gekennzeichnet, daß der lichte Durchmesser der durch das Bodenteil (118) begrenzten Öffnung etwas kleiner ist als der lichte Durchmesser der durch die Leitwand (120) begrenzten Öffnung.

18. Einheit zum Abscheiden von Luft aus dem an einem zahnärztlichen Arbeitsplatz anfallenden Abwasser, mit einer Zentrifugentrommel (18), die eine über radiale Stege (48) von einer Trommelnabe (46) getragene Umfangswand (52), einen von deren oberem Rand getragenen ringförmigen Trommelflansch (54) sowie eine Bodenwand (50) hat, mit einem die Zentrifugentrommel (18) umgebenden Gerätegehäuse (10, 12) und mit einem durch die Ringöffnung des Trommelflansches (54) ins Innere der Zentrifugentrommel (18) geführten Gemischzuführrohr (20), dadurch gekennzeichnet, daß im Inneren des Gemischtzuführrohres (20) unter radialem Abstand von dessen Innenfläche ein Luftabführrohr (28) vorgesehen ist, welches mit einer Luftauslaßöffnung (26) des Gerätegehäuses (10, 12) in Verbindung steht und sich ebenfalls ins Innere der Zentrifugentrommel (18) erstrecht, wobei das Gemischzuführrohr (20) und das Luftabführrohr (28) einen ringförmigen Zyklonraum begrenzen, und daß der radial innen liegende Rand des Trommelflansches (54) im wesentlichen bündig mit der Innenfläche der Umfangswand (52) der Zentrifugentrommel (18) verläuft und der Boden des Gerätegehäuses (10, 12) geschlossen (111) ist.

19. Einheit nach Anspruch 18, dadurch gekennzeichnet, daß das Luftabführrohr (28) drehfest mit der Zentrifugentrommel (18) verbunden ist und an seinem oberen Ende über eine dynamische Dichtung (34-38), die vorzugsweise als Rückdruck aufbauende Pumpe ausgebildet ist, gegen das Gerätegehäuse (10, 12) abgedichtet ist.

20. Einheit nach Anspruch 19, dadurch gekennzeichnet, daß das Luftabführrohr (28) über radiale Arme (30) mit einem Nabenteil (32) verbunden ist, welche durchbrechungsfrei sind und vorzugsweise über mindestens die Hälfte der gesamten axialen Erstreckung des Luftabführrohres verlaufen.

21. Einheit nach einem der Ansprüche 18-20, dadurch gekennzeichnet, daß das Gemischzuführrohr (20) einen tangentialen Gemischeinlaßstutzen (22) trägt.

## Claims

1. Unit for separating air and solids particles, especially fine particles of amalgam, from the waste water obtained at a dental work station, comprising a centrifuge drum (18) which has a peripheral wall (52) carried by a drum hub (46) via radial webs (48), an annular barrier flange (54) which is inwardly re-entrant from the upper edge of the peripheral wall (52), and a base wall (50) having a sludge discharge opening (78), comprising a device housing (10, 12) which surrounds the centrifuge drum (18) and is in communication with a sedimentation vessel (92) lying below it, and comprising a mixture supply pipe (20) which is fed into the interior of the centrifuge drum (18) through the annular opening of the barrier flange (54), characterised in that there is provided in the interior of the mixture supply pipe (20), radially spaced from inner surface thereof, an air removal pipe (28) which is in communication with an air outlet opening (26) of the device housing (10, 12) and also extends into the interior of the centrifuge drum (18), the mixture supply pipe (20) and the air removal pipe (28) defining an annular cyclone space.

2. Unit according to claim 1, characterised in that the centrifuge drum (18) has a conical drum insert (84) the apex of which points downward and the base of which lies opposite and axially spaced from the free end of the mixture supply pipe (20).

3. Unit according to claim 2, characterised in that the centrifuge drum (18) has a second substantially frustoconical drum insert (86) the apex of which points upward and overlaps the free end of the mixture supply pipe (20) with slight radial clearance and the base of which overlaps the first drum insert (84).

4. Unit according to claim 3, characterised in that the lower end of the frustoconical drum insert (86) has a larger diameter than the inner edge of the barrier flange (54).

5. Unit according to any one of claims 1 to 4, characterised in that the air removal pipe (28) is provided at its lower end with a skirt (40) which widens in the shape of a funnel.

6. Unit according to claim 4 in conjunction with claim 5, characterised in that the included angle of the funnelshaped skirt (40) of the air removal pipe (28) and the included angle of the second drum insert (86) are of equal size.

7. Unit according to any one of claims 1 to 6, characterised in that the air removal pipe (28) is rigidly connected to the centrifuge drum (18) and is sealed at its upper end to the device housing (10, 12) by means of a dynamic seal (34-38) which is preferably constructed as a pump that produces a back-pressure.

8. Unit according to claim 7, characterised in that the air removal pipe (28) is connected to a hub part (32) via radial arms (30) which have no openings and preferably extend over at least half the entire axial length of the air removal pipe.

9. Unit according to any one of claims 1 to 8, characterised in that the mixture supply pipe (20) carries a tangential mixture inlet pipe (22).

10. Unit according to any one of claims 1 to 9, characterised by a second mixture supply pipe (74) which is guided into the interior of the centrifuge drum (18) through the base of the device housing (10, 12) and through the sludge discharge opening (78) provided in the base of the centrifuge drum (18).

11. Unit according to claim 10, characterised by an annular seal (80) which is placed on the free end of the second mixture supply pipe (74) and cooperates with an annular seal (82) carried by the centrifuge drum (18).

12. Unit according to claim 11, characterised in that the upper side of the barrier flange (54) is fitted with pump vanes (56).

13. Unit according to claim 12, characterised by a jet pump (104) which is connected to the liquid outlet (72) of the device housing (10, 12) and the outlet of which is connected (106) to the second mixture supply pipe (74) and the suction opening of which is connected (100, 102) to an upper portion of the sedimentation vessel (92).

14. Unit according to any one of claims 1 to 12, characterised by a jet pump (104) the inlet of which is connected to the atmosphere, the outlet of which is connected to the mixture inlet pipe (22) and the suction opening of which is connected (100, 102) to an upper portion of the sedimentation vessel (92).

15. Unit according to any one of claims 1 to 14, characterised in that the lower end of the mature supply pipe (20) is surrounded by an annular channel (114) which opens into it and is in communication with a connecting pipe (116) to which waste water having a low air content is fed.

16. Unit according to claim 15, characterised in that the lower end of the mixture supply pipe (20) carries an inwardly and downwardly inclined base part (118), and a guide wall (120) which correspondingly slopes inwardly and downwardly extends from the annular channel (114).

17. Unit according to claim 16, characterised in that the internal diameter of the opening defined by the base part (118) is slightly smaller than the internal diameter of the opening defined by the guide wall (120).

18. Unit for separating air from the waste water obtained at a dental work station, comprising a centrifuge drum (18) which has a peripheral wall (52) carried by a drum hub (46) via radial webs (48), an annular drum flange (54) carried by the upper edge of the peripheral wall (52), and a base wall (50), comprising a device housing (10, 12) which surrounds the centrifuge drum (18) and comprising a mixture supply pipe (20) which is guided into the interior of the centrifuge drum (18) through the annular opening of the drum flange (54), characterised in that there is provided in the interior of the mixture supply pipe (20), radially spaced from the inner surface thereof, an air removal pipe (28) which is in communication with an air outlet opening (26) of the device housing (10, 12) and also extends into the interior of the centrifuge drum (18), the mixture supply pipe (20) and the air removal pipe (28) defining an annular cyclone space, and the radially inward edge of the drum flange (54) extends substantially flush with the inner surface of the peripheral wall (52) of the centrifuge drum (18), and the base of the device housing (10, 12) is closed (111).

19. Unit according to claim 18, characterised in that the air removal pipe (28) is rigidly connected to the centrifuge drum (18) and is sealed at its upper end to the device housing (10, 12) by means of a dynamic seal (34-38) which is preferably constructed as a pump that produces a back-pressure.

20. Unit according to claim 19, characterised in that the air removal pipe (28) is connected to a hub part (32) via radial arms (30) which do not have any openings and preferably extend over at least half the entire axial length of the air removal pipe.

21. Unit according to any one of claims 18 to 20, characterised in that the mixture supply pipe (20) carries a tangential mixture inlet pipe (22).

## Revendications

1. Dispositif pour séparer de l'air et des particules de substances solides, en particulier de fines particules d'amalgame, d'avec les eaux usées rejetées d'un cabinet de chirurgie dentaire, comprenant un tambour de centrifugation (18) qui présente une paroi périphérique (52) portée par un moyeu (46) par l'intermédiaire de membrures radiales (48), une aile annulaire de blocage (54) saillant vers l'intérieur à partir du bord supérieur de ladite paroi, ainsi qu'une paroi de fond (50) percée d'une ouverture (78) d'écoulement de résidus boueux ; un boîtier (10, 12) qui entoure je tambour de centrifugation (18), et est en communication avec un réceptacle de sédimentation (92) sous-jacent ; et un tube (20) d'admission d'un mélange, pénétrant dans l'espace interne du tambour de centrifugation (18) à travers l'ouverture annulaire de l'aile de blocage (54), caractérisé par le fait qu'un tube (28) d'évacuation d'air, prévu dans l'espace interne du tube (20) d'admission du mélange, à distance radiale de la surface intérieure de ce dernier, est en communication avec un orifice (26) de sortie d'air pratiqué dans le boîtier (10, 12) et pénètre aussi dans l'espace interne du tambour de centrifugation (18), le tube (20) d'admission du mélange et le tube (28) d'évacuation d'air délimitant un espace annulaire de cyclone.

2. Dispositif selon la revendication 1, caractérisé par le fait que le tambour de centrifugation (18) comporte une pièce conique intégrée (84) dont la pointe est orientée vers le bas et dont la base se trouve, avec espacement axial, en regard de l'extrémité libre du tube (20) d'admission du mélange.

3. Dispositif selon la revendication 2, caractérisé par le fait que le tambour de centrifugation (18) présente une seconde pièce intégrée (86) essentiellement tronconique, dont la pointe est orientée vers le haut et coiffe, avec faible jeu radial, l'extrémité libre du tube (20) d'admission du mélange, et dont la base coiffe la première pièce (84) intégrée dans le tambour.

4. Dispositif selon la revendication 3, caractérisé par le fait que l'extrémité inférieure de la pièce tronconique (86) intégrée dans le tambour présente un plus grand diamètre que le bord interne de l'aile de blocage (54).

5. Dispositif selon l'une des revendications 1-4, caractérisé par le fait que le tube (28) d'évacuation d'air est pourvu, à son extrémité inférieure, d'une jupe (40) à évasement infundibuliforme.

6. Dispositif selon la revendication 4 et la revendication 5 prises ensemble, caractérisé par le fait que l'angle d'ouverture de la jupe infundibuliforme (40) du tube (28) d'évacuation d'air, et l'angle d'ouverture de la seconde pièce (86) intégrée dans le tambour, sont égaux.

7. Dispositif selon l'une des revendications 1-6, caractérisé par le fait que le tube (28) d'évacuation d'air est assujetti en rotation au tambour de centrifugation (18) et est rendu étanche par rapport au boîtier (10, 12), à son extrémité supérieure, par l'intermédiaire d'un système dynamique d'étanchement (34-38) réalisé, de préférence, sous la forme d'une pompe développant une contre-pression.

8. Dispositif selon la revendication 7, caractérisé par le fait que le tube (28) d'évacuation d'air est relié à une partie de moyeu (32) par l'intermédiaire de bras radiaux (30) qui sont exempts de discontinuités et s'étendent, de préférence, sur au moins la moitié de toute l'étendue axiale du tube d'évacuation d'air.

9. Dispositif selon l'une des revendications 1-8, caractérisé par le fait que le tube (20) d'admission du mélange porte un raccord tangentiel (22) d'introduction du mélange.

10. Dispositif selon l'une des revendications 1-9, caractérisé par un second tube (74) d'admission d'un mélange, qui pénètre dans l'espace interne du tambour de centrifugation (18) à travers le fond du boîtier (10, 12) et à travers l'ouverture (78) d'écoulement de résidus boueux, prévue dans le fond du tambour de centrifugation (18).

11. Dispositif selon la revendication 10, caractérisé par une garniture annulaire d'étanchement (80) placée sur l'extrémité libre du second tube (74) d'admission du mélange, et coopérant avec une garniture annulaire d'étanchement (82) portée par le tambour de centrifugation (18).

12. Dispositif selon la revendication 11, caractérisé par le fait que la face supérieure de l'aile de blocage (54) est garnie d'ailettes de pompage (56).

13. Dispositif selon la revendication 12, caractérisé par une pompe à jet (104) qui est raccordée à la sortie de liquide (72) du boîtier (10, 12), dont la sortie est reliée (106) au second tube (74) d'admission du mélange, et dont l'orifice d'aspiration est relié (100, 102) à une région supérieure du réceptacle de sédimentation (92).

14. Dispositif selon l'une des revendications 1-12, caractérisé par une pompe à jet (104) dont l'admission est reliée à l'atmosphère, dont la sortie est reliée au raccord (22) d'introduction du mélange, et dont l'orifice d'aspiration est relié (100, 102) à une région supérieure du réceptacle de sédimentation (92).

15. Dispositif selon l'une des revendications 1 à 14, caractérisé par le fait que l'extrémité inférieure du tube (20) d'admission du mélange est entourée par un canal annulaire (114) qui débouche dans ledit tube, et est en communication avec un manchon de raccordement (116) auquel sont délivrées des eaux usées renfermant de faibles proportions d'air.

16. Dispositif selon la revendication 15, caractérisé par le fait que l'extrémité inférieure du tube (20) d'admission du mélange porte une partie de fond (118) s'étendant avec inclinaison vers l'intérieur et vers le bas ; et une paroi déflectrice (120), s'étendant avec obliquité correspondante vers l'intérieur et vers le bas, part du canal annulaire (114).

17. Dispositif selon la revendication 16, caractérisé par le fait que le diamètre intérieur de l'ouverture délimitée par la partie de fond (118) est sensiblement plus petit que le diamètre intérieur de l'ouverture délimitée par la paroi déflectrice (120).

18. Dispositif pour séparer de l'air d'avec les eaux usées rejetées d'un cabinet de chirurgie dentaire, comprenant un tambour de centrifugation (18) qui présente une paroi périphérique (52) portée par un moyeu (46) par l'intermédiaire de membrures radiales (48), une aile annulaire (54) portée par le bord supérieur de ladite paroi, ainsi qu'une paroi de fond (50) ; un boîtier (10, 12) entourant le tambour de centrifugation (18) ; et un tube (20) d'admission d'un mélange, pénétrant dans l'espace interne du tambour de centrifugation (18) à travers l'ouverture annulaire de l'aile (54) dudit tambour, caractérisé par le fait qu'un tube (28) d'évacuation d'air, prévu dans l'espace interne du tube (20) d'admission du mélange, à distance radiale de la surface intérieure de ce dernier, est en communication avec un orifice (26) de sortie d'air pratiqué dans le boîtier (10, 12) et pénètre aussi dans l'espace interne du tambour de centrifugation (18), le tube (20) d'admission du mélange et le tube (28) d'évacuation d'air délimitant un espace annulaire de cyclone; et par le fait que le bord de l'aile (54) du tambour, situé radialement à l'intérieur, s'étend pour l'essentiel à fleur de la surface intérieure de la paroi périphérique (52) du rambour de centrifugation (18), et le fond du boîtier (10, 12) est fermé (111).

19. Dispositif selon la revendication 18, caractérisé par le fait que le tube (28) d'évacuation d'air est assujetti en rotation au tambour de centrifugation (18) et est rendu étanche par rapport au boîtier (10, 12), à son extrémité supérieure, par l'intermédiaire d'un système dynamique d'étanchement (34-38) réalisé, de préférence, sous la forme d'une pompe développant une contre-pression.

20. Dispositif selon la revendication 19, caractérisé par le fait que le tube (28) d'évacuation d'air est relié à une partie de moyeu (32) par l'intermédiaire de bras radiaux (30) qui sont exempts de discontinuités et s'étendent, de préférence, sur au moins la moitié de toute l'étendue axiale du tube d'évacuation d'air.

21. Dispositif selon l'une des revendications 18-20, caractérisé par le fait que le tube (20) d'admission du mélange porte un raccord tangentiel (22) d'introduction du mélange.
